# EUROPÄISCHE PATENTSCHRIFT

(11) **EP 0 705 184 B1**
(45) Veröffentlichungstag und Bekanntmachung des Hinweises auf die Patenterteilung: **23.04.1997**
(21) Anmeldenummer: 94920423.4
(22) Anmeldetag: 01.06.1994
(51) Int. Cl.: B60R 21/32, G08B 21/00

(54) **VORRICHTUNG ZUR ERFASSUNG DER ANWESENHEIT VON PERSONEN AUF BEFÖRDERUNGSMITTELN**
DEVICE FOR DETECTING THE PRESENCE OF PERSONS ON MEANS OF TRANSPORT
PROCEDE DE DETECTION DE LA PRESENCE DE PERSONNES SUR DES MOYENS DE TRANSPORT

(30) Priorität: 22.06.1993 DE 4320513; 03.07.1993 DE 4322159
(43) Veröffentlichungstag der Anmeldung: 10.04.1996
(73) Patentinhaber: VOS VERKEHRS-OPTIMIERUNGS-SYSTEME GmbH & CO. KG, A-6890 Lustenau (AT)
(72) Erfinder: SONDEREGGER, Wilhelm, A-6850 Dornbirn (AT); KÜHNE, Georg, A-6830 Rankwill (AT); HUPP, Thomas, A-6800 Feldkirch (AT)
(74) Vertreter: Riebling, Peter, Dr.-Ing., Patentanwalt
(86) Internationale Anmeldenummer: EP9401779
(87) Internationale Veröffentlichungsnummer: WO9500368

(56) Entgegenhaltungen:
- EP-A- 0 560 351
- DE-A- 3 635 644
- US-A- 3 864 668
- US-A- 4 474 185
- US-A- 4 885 566

## Beschreibung

Die Erfindung betrifft eine Vorrichtung zur Erfassung der Anwesenheit von Personen auf Beförderungsmitteln nach dem Oberbegriff des Patentanspruchs 1.

Derartige Vorrichtungen haben sich als sehr wichtig herausgestellt, wenn es darum geht, die Belegung eines Sitzes in einem Fahrzeug festzustellen. Beispielsweise ist dies erforderlich, um bei einem Beifahrer-Airbag festzustellen, ob eine Person auf einem Beifahrersitz sitzt, um ein unnötiges Auslösen des Beifahrer-Airbags im Falle eines Unfalles zu vermeiden.

Ebenso ist es notwendig die Anzahl der Personen, nicht nur auf dem Beifahrersitz, festzustellen, wenn es darum geht, einen bestimmten Fahrzeugbelegungsfaktor zu ermitteln. Dieser Fahrzeugbelegungsfaktor bezieht sich darauf, eine Rechengröße zu erarbeiten, die angibt, mit wieviel Personen das Fahrzeug welche Wegstrecke zurückgelegt hat. Es hat sich nämlich herausgestellt, daß in der Regel Personenkraftwagen nur mit einem oder zwei Personen besetzt werden und daß eine darüber hinausgehende Personenbelegungszahl eher die Ausnahme ist.

Es ist nun wünschenswert, den Personenbelegungsfaktor von Personenkraftwagen zu erhöhen und hierzu ist es erforderlich, zunächst die Anzahl der im Kraftfahrzeug mitfahrenden Personen möglichst fälschungssicher zu ermitteln.

Ein weiteres Problem besteht darin, daß man möglichst genau eine Anlegekontrolle für angelegte Sicherheitsgurte haben will. Dies kann aus versicherungsrechtlichen Gründen bei Unfällen wünschenswert sein.

Die gattungsbildende US-A- 4 885 566 beschreibt eine Vorrichtung zur Erfassung der Sitzbelegung von Fahrzeugen, wobei den Personen jeweils eine elektrische Überwachungsanordnung in einem kapazitiven Sensor und einem Gurtschloßschalter zugeordnet sind. Diese Vorrichtung erfasst die großen Signaländerungen, die sich beim Hinsetzen bzw. Aufstehen vom Sitz ergeben und kann aus dem Verlauf der Signaländerung eine Belegung des Sitzes mit Gegenständen oder Personen unterscheiden.

Bisher ist es lediglich bekannt, eine Personenanwesenheit z. B. durch Ultraschallsensoren oder Infrarotsensoren durchzuführen. Diese Sensoren sind jedoch nicht fälschungssicher und im übrigen ungenau.

Der Erfindung liegt deshalb die Aufgabe zugrunde, eine Vorrichtung der eingangs genannten Art so weiterzubilden, daß mit hoher Fälschungssicherheit eine Erfassung von Personen auf Sitzen, z. B. in einem Kraftfahrzeug, möglich ist.

Zur Lösung der gestellten Aufgabe ist die Erfindung durch die technische Lehre des Anspruches 1 gekennzeichnet.

Wesentliches Merkmal der Erfindung ist, daß nun die Anwesenheit jeweils einer Person mit einer oder mehreren der Person zugeordneten Elektroden erfaßt wird, wobei eine kapazitive Messung am Körper der Person mit Hilfe der Elektroden durchgeführt wird. Der Körper der zu erfassenden Person wird als Dielektrikum betrachtet, welcher als bewegbarer Körper zwischen mindestens zwei Elektroden angeordnet ist. Zwischen den Elektroden entwickeln sich Feldlinien, welche durch den im Feldlinienverlauf sich befindlichen verändernden Körper modifiziert werden. Diese Modifikation der Feldlinien, durch die Bewegung der sich im Wirkfeld der Elektrode befindlichen Person sowie deren Atmung und/oder Herzschlag (Thoraxveränderungen) verursacht, stellt eine genaue und im übrigen auch fälschungssichere Messung für die Anwesenheit einer Person, die sich zwischen den Elektroden befindet, dar.

Für die Anordnung der Elektroden am Körper gibt es eine Reihe von Möglichkeiten, die sämtliche von der vorliegenden Erfindung umfaßt sein sollen.

In einer ersten, bevorzugten Ausführungsform ist es vorgesehen, daß eine erste Elektrode am Sicherheitsgurt befestigt ist und sich durch die Befestigung am Sicherheitsgurt am Vorderkörper der Person anlegt, während eine weitere Elektrode an der Rückenlehne befestigt ist, welche mit der vorher erwähnten ersten Elektrode einen Kondensator bildet.

Hierbei ist wesentlich, daß die Atmung der Person durch rhythmische Veränderung des Oberkörpers im Feldlinienverlauf der beiden einander gegenüberliegenden Elektroden erfaßt wird.

Die durch die Atmung bedingte rhythmische Erweiterung und Verminderung des Volumens des Oberkörpers wird somit als Atemsignal abgeleitet und wird entsprechend ausgewertet. Nachdem die Parameter der menschlichen Atmung charakteristisch sind, ist diese Methode besonders fälschungssicher, weil z. B. ein angeschnallter Hund eine andere Atmung hat wie ein angeschnallter Mensch, so daß auf diese Weise das System nicht zu betrügen ist.

Ebenso können angeschnallte Gegenstände leicht von der Auswerteelektronik erfaßt und ausgeschieden werden. Es handelt sich damit also um eine relativ fälschungssichere Erfassungsmethode.

Im Zusammenhang mit dem Gurtschloß kann das beschriebene Sensorsystem auch als Gurtanlege-Kontrolle verwendet werden, wobei bei entsprechender Signalauswertung ein korrektes, körpervorderseitiges Anlegen des Gurtes erfaßt werden kann.

Ebenso kann eine derartige Vorrichtung als Personensensor für einen Airbag verwendet werden, welche neben den Vordersitzen sogar auf Rücksitzen funktioniert, wenn in zukünftiger Zeit es vorgesehen ist, daß auch auf den Rücksitzen entsprechende Airbags verwendet werden.

Statt der hier beschriebenen Elektrodenanordnung, wobei eine erste Elektrode bevorzugt im Diagonalgurt oder im Beckengurt des Sicherheitsgurtes angeordnet ist und die zweite Elektrode bevorzugt im Rückenpolster, gibt es auch andere Möglichkeiten.

So kann es vorgesehen sein, statt der im Rückenpolster angeordneten Elektrode, das in der Regel aus Metall bestehende Sitzgestell selbst als Elektrode aufzufassen und hierbei die im Rückenpolster befindliche Elektrode einzusparen.

Ebenso kann es vorgesehen sein, statt der Anordnung von ein oder mehreren Elektroden, die im Sicherheitsgurt angeordnet sind, den Sicherheitsgurt selbst als Elektrode auszubilden. Hierbei kann es dann erforderlich sein, in einer bestimmten Fläche des Sicherheitsgurtes elektrisch leitende Gewebefäden einzuweben, die durch entsprechende Signaldrähte mit der Auswerteelektronik verbunden sind.

Ebenso ist es möglich, daß zwei voneinander beabstandete Elektroden im oder am Sicherheitsgurt angeordnet sind.

Statt der Anordnung von Elektroden im Sicherheitsgurt können die Elektroden auch an Teilen des Kraftfahrzeuges angeordnet werden, wie z. B. an der Rückenlehne, im Rückenbereich, um dort ebenfalls den sich bewegenden Körper der Person als Dielektrikum zwischen zwei oder mehreren Kondensatorplatten zu verwenden.

Statt einer Kapazitätsmessung des Oberkörpers können auch andere Teile des menschlichen Körpers für die Kapazitätsmessung verwendet werden, wie z. B. Bauchgegend, Unterleib und Oberschenkel und dgl. mehr. Dies heißt, daß die Elektroden nicht notwendig in der Rückenlehne und in entsprechenden seitlichen Bereichen der Rückenlehne angeordnet sein können, es ist ebenso vorgesehen, diese Elektroden im Sitzpolster oder an der Vorderkante des Sitzpolsters anzuordnen, um beispielsweise eine Kapazitätsmessung an den oben genannten Körperregionen der Person durchzuführen.

Es ist ebenso nicht erforderlich, die seitlichen Elektroden am Oberkörper in den seitlichen Bereichen eines Sitzes anzuordnen. Es genügt auch, mindestens zwei Elektroden in gegenseitigem Abstand an der Rückenlehne anzuordnen, weil auch durch die Atembewegungen des Oberkörpers eine Kapazitätsänderung zwischen den beiden nebeneinander im Abstand angeordneten Elektroden erzeugt wird.

Ebenso kann es möglich sein, die Elektroden durch den Oberkörper auf Druck beanspruchen zu lassen, wobei z. B. eine erste Elektrode an der Rückseite der Rückenlehne und eine zweite Elektrode an der Vorderseite der Rückenlehne nächst dem Rücken der Person angeordnet wird. Der Oberkörper der Person drückt dann auf die Elektrode in der Rückenlehne und bewegt diese aufgrund der Atmungsbewegung in Richtung auf die hinter der Rückenlehne angeordnete Elektrode, wodurch ebenfalls eine Kapazitätsänderung zwischen den beiden Elektroden erzeugt wird.

Wichtig bei allen Anordnungen ist, daß eine für den menschlichen Körper charakteristische Atmung erfaßt wird, um so das Vorhandensein von Menschen, von Tieren oder Gegenständen zu unterscheiden.

In der vorstehenden Beschreibung wurde als wichtigster Parameter die Erfassung der menschlichen Atmung beschrieben. Die Erfindung ist hierauf jedoch nicht beschränkt. Stattdessen können in Alleinstellung oder in Kombination mit der Atmung noch weitere physiologische Parameter erfaßt werden.

Dies sind insbesondere Herzschlag und Körpermotilität. Eine weitere Verbesserung der Fälschungssicherheit ergibt sich daraus, daß man Plausibilitätsvergleiche zwischen den an einzelnen Personen eines Fahrzeuges abgeleiteten Parametern durchführen kann.

Das Anwendungsgebiet der Erfindung beschränkt sich nicht nur auf die Erfassung von Personen auf Sitzplätzen in Kraftfahrzeugen, sondern darüber hinaus können auch derartige Messungen in anderen Fahrzeugen, wie z. B. Luft-, Wasser- und schienengebundene Fahrzeuge durchgeführt werden.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert den Schnitt durch eine Meßanordnung nach der Erfindung in einer bevorzugten Ausgestaltung;
- Figur 2:: schematisiert ein Schaltbild einer Kapazitätsmessung.

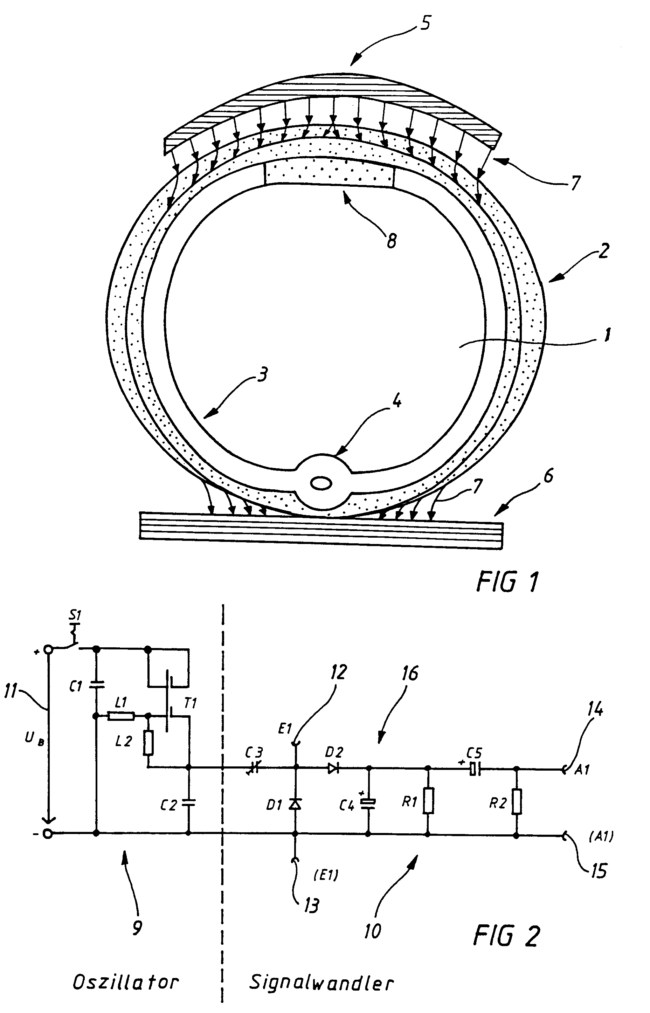

In Figur 1 wird als bevorzugtes Ausbildungsbeispiel eine Elektrodenanordnung gezeigt, die im wesentlichen aus zwei Elektroden 5,6 besteht, wobei bevorzugt z. B. die Elektrode 6 in einem Rückenpolster angeordnet ist und die Elektrode 5 in einem Sicherheitsgurt, z. B. im Bereich des Diagonal- oder Beckengurtes.

Der menschliche Thorax 1 weist ein bestimmtes Volumen auf und wird begrenzt durch Rippenbögen 3, die außenliegend von Gewebe 2, Muskeln und dgl. umfaßt sind. Die Rippenbögen 3 bilden im Bereich der Wirbelsäule 4 ein Scharnier, so daß der gesamte Thorax 1 sich aufgrund der Atembewegung im Feldlinienfeld der Feldlinien 7 zwischen den Elektroden 5,6 rhythmisch bewegt.

Das kapazitive Sensorsystem erfaßt Veränderungen der Kapazität des zwischen vorderer und hinterer Elektrodenanordnung gebildeten Kondensators. Damit werden Veränderungen vom Dielektrikum, vom Plattenabstand und Veränderungen in den Wegstrecken der Feldlinien Luft - Gewebe gemessen. Man kann die Meßanordnung somit als veränderlich geschichteten Kondensator darstellen.

Das Volumen des Brustkorbes (Thorax) wird durch Heben und Senken der Rippenbögen verändert.

Damit überlagern sich für die Messung folgende Effekte:
1.) - Der Luftspalt zur Brustelektrode (Kleidung) wird bei Einatmung etwas verkleinert.
2.) - Die am Kondensator beteiligte Gurtoberfläche wird bei Einatmung etwas vergrößert, da sich der Thorax hebt.
3.) - Der Weg der Feldlinien durch das Gewebe wird bei Einatmung etwas länger.

Effekt 1 und 2 vergrößern, Effekt 3 verkleinert die Kapazität. Effekt 3 ist hier von der Auswirkung her unwesentlich (ca. 50-fach geringer als Effekt 1), so daß für das Wirkprinzip lediglich 1 und 2 in Frage kommen.

Der Anteil des Zwerchfells bei der Atmung wird im unteren Gurtbereich nur registriert, wenn der Brustgurt einen Teil des Bauches erfaßt. Der Bauchgurt erfaßt naturgemäß nur diesen Anteil.

In Figur 2 ist der erste Teil einer Auswerteschaltung 16 gezeigt, die im wesentlichen aus einem Oszillator 9 und einem nachgeschalteten Signalwandler 10 besteht.

Am Oszillator 9 wird über den Spannungseingang 11 eine Gleichspannung angelegt und der darin enthaltene Oszillator schwingt mit einer Frequenz von z. B. 4 MHz.

Diese Frequenz wird über den Koppelkondensator C3 dem Signalwandler 10 zugeführt, wobei an den Meßeingängen 12,13 jeweils eine Elektrode 5,6 anliegt.

Der Signalwandler besteht im wesentlichen aus einem kapazitiven Spannungsteiler mit nachgeschaltetem Gleichrichter (Diode D2), der dann mit C4 und R1 ein Filter bildet. Das Ausgangssignal wird dann über den Kondensator C5 und dem parallel geschalteten Widerstand R2 hochpaßgefiltert und liegt dann an dem Signalausgang 14 an, wo hingegen 15 der Masseausgang ist.

An den Ausgängen 14, 15 wird das Signal dann weiterverarbeitet, z. B. einem Rechner zugeführt, um so die Atemfrequenz und weitere Atemparameter störungsfrei zu ermitteln.

Zur Ausschaltung von Bewegungs-Artefakten kann es vorgesehen sein, daß neben den beiden Meßelektroden 5,6 noch weitere Elektroden vorhanden sind, oder andere Meßsensoren, um ein unerwünschtes Bewegungsspiel, welches das Meßergebnis zwischen den Elektroden 5,6 verfälscht, ausschalten zu können. Hierbei können weitere Elektroden vorhanden sein, um z. B. eine Vibration des Körpers, eine hoch-tiefgehende Beschleunigung des Körpers aufgrund von Fahrbahnunebenheiten und dgl. zu erfassen und dies mit in die Auswertung einzubeziehen.

Die Elektroden 5,6 können als Flächenelektroden ausgebildet sein, z. B. in Form einer Folie. Ebenso kann die Elektrode durch einen Draht gebildet sein.

### ZEICHNUNGSLEGENDE

- 1: Thorax
- 2: Gewebe
- 3: Rippenbogen
- 4: Wirbelsäule
- 5: Elektrode
- 6: Elektrode
- 7: Feldlinien
- 8: Knorpelgewebe
- 9: Oszillator
- 10: Signalwandler
- 11: Spannungseingang
- 12: Meßeingang
- 13: Meßeingang
- 14: Signalausgang
- 15: Masseausgang
- 16: Auswerteschaltung

## Patentansprüche

1. Vorrichtung zur Erfassung der Anwesenheit von Personen auf Beförderungsmitteln, insbesondere innerhalb von Fahrzeugen, wobei den Personen jeweils eine elektrische Überwachungsanordnung zugeordnet ist, **dadurch gekennzeichnet,** daß über Elektroden (5,6) eine Abtastung des menschlichen Körpers (1) derart erfolgt, daß die Meßung zeitliche geringe Körperveränderungen, insbesondere durch Atmung und/oder Herzschlag verursacht, erfaßt.

2. Vorrichtung nach Anspruch 1, **dadurch gekennzeichnet,** daß die Elektroden (5,6) an einem Sicherheitsgurt bzw. an der Rückenlehne in kapazitiver Anordnung befestigt sind, wodurch ein Kondensator gebildet wird, welcher der Auswerteschaltung (16) über Meßeingänge (12,13) zugeschaltet wird.

3. Vorrichtung nach den Ansprüchen 1 und 2, **dadurch gekennzeichnet,** daß das metallische Gestell des Sitzes als eine Elektrode verwendet wird.

4. Vorrichtung nach den Ansprüchen 1 bis 2, **dadurch gekennzeichnet,** daß der Sicherheitsgurt als Elektrode ausgebildet ist, wobei Teile bzw. der ganze Sicherheitsgurt, der mit der Auswerteschaltung (16) elektrisch verbunden ist, elektrisch leitend ausgeführt werden.

5. Vorrichtung nach Anspruch 1, **dadurch gekennzeichnet,** daß Elektroden an Teilen des Kraftfahrzeuges angeordnet sind, insbesondere links und rechts im Rückenbereich an Sitzen, wobei der Körper der Person als Dielektrikum im Feld zweier oder mehrerer Kondensatorplatten vorliegt.

6. Vorrichtung nach Anspruch 1, **dadurch gekennzeichnet,** daß außer einer Kapazitätsmessung des Oberkörpers andere Teile für die Kapazitätsmessung herangezogen werden, insbesondere die Bauchgegend, der Unterleib, die Oberschenkel und dgl.

7. Vorrichtung nach Anspruch 6, **dadurch gekennzeichnet,** daß Elektroden in der Sitzfläche angeordnet sind.

8. Vorrichtung nach Anspruch 1, **dadurch gekennzeichnet,** daß zwei Elektroden in gegenseitigem Abstand in der Rückenlehne angeordnet sind.

9. Vorrichtung nach Anspruch 1, **dadurch gekennzeichnet,** daß Elektroden in kapazitiver Anordnung vorgesehen sind, die durch den menschlichen Oberkörper auf Druck beansprucht werden, wobei eine erste Elektrode an der Rückenseite der Rückenlehne und eine zweite Elektrode an der Vorderseite der Rückenlehne angeordnet ist.

10. Vorrichtung nach den Ansprüchen 1 bis 9, **dadurch gekennzeichnet,** daß die Auswerteschaltung einen Oszillator (9) und einen nachgeschalteten Signalwandler (10) mit einem kapazitiven Spannungsteiler, gebildet aus C3 und den an die Meßeingänge (12,13) zugeführten Elektroden, einem Gleichrichter D2 und Filter R1,C4 sowie R2,C5, beinhaltet.

## Claims

1. Device for detecting the presence of persons in means of transport, particularly within vehicles, where an electrical monitoring arrangement is assigned to the persons in each instance, **characterized in that** scanning of the human body (1) takes place via electrodes (5,6) in such a way that the measurement detects slight body changes over time, particularly caused by breathing and/or heart beat.

2. Device pursuant to claim 1, **characterized in that** the electrodes (5,6) are attached to a safety belt or to the seatback, in a capacitative arrangement, forming a capacitor which is switched into the evaluation circuit (16) by way of measurement inputs (12,13).

3. Device pursuant to one of claims 1 and 2, **charaterized in that** the metal frame of the seat is used as an electrode.

4. Device pursuant to claims 1 to 2, **characterized in that** the safety belt is structured as an electrode, where parts of or the whole safety belt, electrically connected with the evaluation circuit (16), are made to be electrically conductive.

5. Device pursuant to claim 1, **characterized in that** electrodes are arranged at parts of the motor vehicle, particularly to the left and right in the lumbar region, on seats, where the person's body is present as a dielectric in the field of two or more capacitor plates.

6. Device pursuant to claim 1, **characterized in that** aside from a capacity measurement of the upper body, other parts are included in the capacity measurement, particularly the abdominal region, the lower body, the thighs, etc.

7. Device pursuant to claim 6, **characterized in that** electrodes are arranged in the seating surface.

8. Device pursuant to claim 1, **characterized in that** two electrodes are arranged at a reciprocal distance on the seatback.

9. Device pursuant to claim 1, **characterized in that** electrodes are provided in a capacitative arrangement, which are stressed by pressure caused by the human upper body, where a first electrode is arranged on the back of the seatback, and a second electrode is arranged on the front of the seatback.

10. Device pursuant to claim 1 to 9, **characterized in that** the evaluation circuit comprises an oscillator (9) and a subsequent signal transducer (10) with a capacitative voltage divider, formed from C3 and the electrodes passed to the measurement inputs (12,13), a rectifier D2 and a filter R1, C4 as well as R2, C5.

## Revendications

1. Dispositif pour détecter la présence de personnes dans des moyens de transport, en particulier à l'intérieur de véhicules, un dispositif de surveillance électrique étant associé à chaque personne, caractérisé en ce qu'un balayage du corps humain (1) a lieu grâce à des électrodes (5, 6) de telle sorte que la mesure détecte de faibles modifications du corps dans le temps, dues notamment à la respiration et/ou aux battements de coeur.

2. Dispositif selon la revendication 1, caractérisé en ce que les électrodes (5, 6) sont fixées respectivement sur une ceinture de sécurité et sur le dossier suivant un agencement capacitif, ce qui forme un condensateur qui est raccordé par l'intermédiaire d'entrées de mesure (12, 13) au circuit d'évaluation (16).

3. Dispositif selon les revendications 1 et 2, caractérisé en ce que la carcasse métallique du siège sert d'électrode.

4. Dispositif selon les revendications 1 à 2, caractérisé en ce que la ceinture de sécurité est conçue comme une électrode, étant précisé que des parties de la ceinture ou l'ensemble de la ceinture, qui est reliée au circuit d'évaluation (16) par une liaison électrique, sont conducteurs d'électricité.

5. Dispositif selon la revendication 1, caractérisé en ce que des électrodes sont disposées sur des éléments du véhicule automobile, en particulier dans les parties gauche et droite de sièges, dans la zone du dos, le corps de la personne servant de diélectrique dans le champ de deux plaques de condensateur ou plus.

6. Dispositif selon la revendication 1, caractérisé en ce que pour la mesure de capacité, on utilise en plus du buste d'autres parties, en particulier la région du ventre, le bas-ventre, les cuisses, etc.

7. Dispositif selon la revendication 6, caractérisé en ce que des électrodes sont disposées dans la surface du siège.

8. Dispositif selon la revendication 1, caractérisé en ce que deux électrodes sont disposées, espacées l'une de l'autre, dans le dossier.

9. Dispositif selon la revendication 1, caractérisé en ce qu'il est prévu, suivant un agencement capacitif, des électrodes qui sont soumises à la pression du buste humain, une première électrode étant disposée sur le côté arrière du dossier tandis qu'une seconde électrode est disposée sur le côté avant du dossier.

10. Dispositif selon les revendications 1 à 9, caractérisé en ce que le circuit d'évaluation contient un oscillateur (9) et un convertisseur de signaux (10) qui est monté en aval et qui comprend un diviseur de tension capacitif formé de C3 et des électrodes reliées aux entrées de mesure (12, 13), un redresseur D2 et des filtres R1, C4 et R2, C5.
